# EUROPÄISCHE PATENTANMELDUNG

(11) **EP 3 521 093 A1**
(43) Veröffentlichungstag der Anmeldung: **07.08.2019**
(21) Anmeldenummer: 18211633.5
(22) Anmeldetag: 11.12.2018
(51) Int. Cl.: B60L 3/00, B60L 3/08, B60L 3/10, B60L 7/18, B60L 7/10, B60L 7/24, B60L 7/28, B60L 15/20, B60L 50/10, B60L 50/60, B60L 50/61

(54) **VERFAHREN ZUM BETREIBEN EINER BREMSANLAGE FÜR EIN KRAFTFAHRZEUG SOWIE ENTSPRECHENDE BREMSANLAGE**

(30) Priorität: 05.02.2018 DE 102018201689
(71) Anmelder: AUDI AG, 85045 Ingolstadt (DE)
(72) Erfinder: Glück, Christian, 85072 Eichstätt (DE)

(57) **Zusammenfassung**

Die Erfindung betrifft ein Verfahren zum Betreiben einer Bremsanlage (1) für ein Kraftfahrzeug, wobei die Bremsanlage (1) eine mit wenigstens einem Rad des Kraftfahrzeugs mechanisch gekoppelte Wirbelstrombremse (3) zum Bereitstellen einer auf das Rad wirkenden Bremskraft aufweist, wobei eine elektrische Maschine (2) mechanisch mit dem Rad gekoppelt oder koppelbar und elektrisch an die Wirbelstrombremse (3) angeschlossen ist. Dabei ist vorgesehen, dass die Wirbelstrombremse (3) in einer Notbremsbetriebsart zum Bremsen des Rads parallel mit mittels der als Generator betriebenen elektrischen Maschine (2) bereitgestellter Energie und mit einem Energiespeicher (8) entnommener elektrischer Energie beaufschlagt wird. Die Erfindung betrifft weiterhin eine Bremsanlage (1) für ein Kraftfahrzeug.

## Beschreibung

Die Erfindung betrifft ein Verfahren zum Betreiben einer Bremsanlage für ein Kraftfahrzeug, wobei die Bremsanlage eine mit wenigstens einem Rad des Kraftfahrzeugs gekoppelte Wirbelstrombremse zum Bereitstellen einer auf das Rad wirkenden Bremskraft aufweist, wobei eine elektrische Maschine mechanisch mit dem Rad gekoppelt oder koppelbar und elektrisch an die Wirbelstrombremse angeschlossen ist. Die Erfindung betrifft weiterhin eine Bremsanlage für ein Kraftfahrzeug.

Aus dem Stand der Technik ist beispielsweise die Druckschrift DE 10 2010 064 252 A1 bekannt. Diese beschreibt ein zusätzliches Bremssystem für ein zumindest elektroangetriebenes Kraftfahrzeug. Eine erste elektrische Maschine, die als Elektromotor und als Gegenstrombremse ausgeführt ist, wird dazu verwendet, um zusätzliche Bremskräfte in dem Fahrzeug zu erzeugen. Die dafür benötigte elektrische Energie wird durch eine zweite elektrische Maschine bereitgestellt, die als Generatorbremse an einen Verbrennungsmotor des Kraftfahrzeugs angekoppelt ist.

Es ist Aufgabe der Erfindung, ein Verfahren zum Betreiben einer Bremsanlage für ein Kraftfahrzeug vorzuschlagen, welches gegenüber bekannten Verfahren Vorteile aufweist, insbesondere ein rasches und unter verschiedensten Umgebungsbedingungen äußerst zuverlässiges und rasches Abbremsen des Kraftfahrzeugs ermöglicht.

Dies wird erfindungsgemäß mit einem Verfahren zum Betreiben einer Bremsanlage mit den Merkmalen des Anspruchs 1 erreicht. Dabei ist vorgesehen, dass die Wirbelstrombremse in einer Notbremsbetriebsart zum Bremsen des Rads parallel mit mittels der als Generator betriebenen elektrischen Maschine bereitgestellter elektrischer Energie und mit einem Energiespeicher entnommener elektrischer Energie beaufschlagt wird.

Die Bremsanlage dient einem Bremsen des Kraftfahrzeugs und ist hierzu vorzugsweise als Betriebsbremsanlage ausgestaltet. Die Bremsanlage verfügt über die elektrische Maschine und die Wirbelstrombremse, welche beide zum Bremsen des Rads des Kraftfahrzeugs angesteuert werden können. Zum Betreiben der Wirbelstrombremse, also zum Bewirken der auf das Rad wirkenden Bremskraft mittels der Wirbelstrombremse, wird die Wirbelstrombremse mit elektrischer Energie beaufschlagt. In anderen Worten bewirkt die Wirbelstrombremse die auf das Rad wirkende Bremskraft, sobald und solange sie mit elektrischer Energie beaufschlagt wird.

Die elektrische Maschine kann gleichzeitig Bestandteil einer Antriebseinrichtung für das Kraftfahrzeug sein und insoweit zumindest zeitweise ein auf das Antreiben des Kraftfahrzeugs gerichtetes Drehmoment bereitstellen. Im Rahmen der Bremsanlage wird die elektrische Maschine jedoch überwiegend zum Bewirken einer auf das Rad wirkenden Bremskraft und mithin zum Bremsen des Rads betrieben. Auch hier kann jedoch ein Antreiben des Rads vorgesehen sein, beispielsweise im Rahmen einer Antiblockierfunktion. Das Kraftfahrzeug verfügt vorzugsweise über mehrere Räder, von welchen wenigstens eines, bevorzugt jedoch mehrere, das wenigstens eine Rad darstellt beziehungsweise darstellen.

Zusätzlich zu der elektrischen Maschine und der Wirbelstrombremse kann die Bremsanlage eine mechanische Bremse aufweisen, welche alternativ als Reibungsbremse bezeichnet werden kann. Auch die mechanische Bremse ist zum Bremsen des Rads beziehungsweise zum Bewirken einer auf das Rad wirkenden Bremskraft ausgebildet. Vorzugsweise kommt die mechanische Bremse lediglich dann zum Einsatz, wenn ein Bremsen des Rads mittels der elektrischen Maschine und der Wirbelstrombremse nicht möglich ist. Zur Umsetzung der erwähnten Antiblockierfunktion kann es vorgesehen sein, das Rad mittels der mechanischen Bremse zu bremsen und gleichzeitig - falls notwendig - mittels der elektrischen Maschine anzutreiben, um ein Blockieren des Rads zu verhindern. In anderen Worten arbeitet die elektrische Maschine gegen die mechanische Bremse derart, dass das Blockieren des Rads verhindert oder beendet wird.

Sowohl die elektrische Maschine als auch die Wirbelstrombremse sind mechanisch mit dem Rad gekoppelt, zumindest zeitweise oder permanent. Es kann beispielsweise vorgesehen sein, dass die Wirbelstrombremse unmittelbar dem Rad zugeordnet ist und permanent mit diesem beziehungsweise einer Radachse gekoppelt ist, wohingegen die Wirbelstrombremse über eine Schaltkupplung an das Rad angeschlossen ist, mittels welcher die Wirkverbindung zwischen der Wirbelstrombremse und dem Rad wahlweise unterbrochen oder hergestellt sein kann. Es kann jedoch auch vorgesehen sein, dass die elektrische Maschine und die Wirbelstrombremse jeweils unmittelbar dem Rad zugeordnet und vorzugsweise permanent mit ihm gekoppelt sind. In letzterem Fall sind die elektrische Maschine und die Wirbelstrombremse beispielsweise Bestandteil eines Einzelradantriebs für das Rad.

Grundsätzlich ist es wünschenswert, auf den Einsatz der mechanischen Bremse soweit als möglich zu verzichten. Hierauf wurde bereits hingewiesen. Dennoch muss jedoch in jedem Fall und bei allen Umgebungsbedingungen ein zuverlässiges Bremsen des Rads sichergestellt sein. Aus diesem Grund ist es vorgesehen, in der Notbremsbetriebsart die Wirbelstrombremse nicht lediglich mit elektrischer Energie aus einer Energiequelle zu versorgen, sondern vielmehr mit elektrischer Energie aus mehreren Energiequellen. Als Energiequellen dienen hierbei die elektrische Maschine, welche als Generator betrieben wird, und der Energiespeicher, der zur Zwischenspeicherung von elektrischer Energie dient.

In der Notbremsbetriebsart kann die elektrische Maschine grundsätzlich beliebig angetrieben werden. Beispielsweise ist die elektrische Maschine, die in der Notbremsbetriebsart als Generator arbeitet, mechanisch mit dem Rad gekoppelt, sodass die elektrische Maschine die auf das Rad wirkende Bremskraft teilweise bewirkt. Der Rest der Bremskraft wird von der Wirbelstrombremse erzeugt.

Alternativ kann es jedoch auch vorgesehen sein, dass die elektrische Maschine in der Notbremsbetriebsart mechanisch von dem Rad entkoppelt ist, beispielsweise durch Öffnen der vorstehend bereits erwähnten Schaltkupplung. In diesem Fall wird beispielsweise die elektrische Maschine mittels der Antriebseinrichtung beziehungsweise einem Antriebsaggregat der Antriebseinrichtung des Kraftfahrzeugs zum Bereitstellen der elektrischen Energie für die Wirbelstrombremse angetrieben.

Das Antriebsaggregat kann als weitere elektrische Maschine vorliegen oder als Brennkraftmaschine oder dergleichen ausgestaltet sein. Bei einer derartigen Vorgehensweise trägt die elektrische Maschine nicht zum Erzeugen der auf das Rad wirkenden Bremskraft bei. Vielmehr wird diese Bremskraft allein mittels der Wirbelstrombremse erzielt.

Einerseits wird also die Wirbelstrombremse mit der elektrischen Energie beaufschlagt, welche mithilfe der elektrischen Maschine erzeugt wird. Andererseits soll zusätzlich die Wirbelstrombremse elektrisch an den Energiespeicher angeschlossen sein und diesem elektrische Energie zum Betreiben der Wirbelstrombremse entnommen werden. Bevorzugt sind hierbei die elektrische Maschine und der Energiespeicher elektrisch parallel an die Wirbelstrombremse angeschlossen, wobei dies besonders bevorzugt derart der Fall ist, dass die mittels der elektrischen Maschine bereitgestellte elektrische Energie nicht dem Energiespeicher, sondern der Wirbelstrombremse zugeführt wird. Beispielsweise ist hierzu eine entsprechende Beschaltung der elektrischen Maschine, des Energiespeichers und der Wirbelstrombremse vorgesehen, beispielsweise unter Verwendung von wenigstens einer Diode.

Durch das elektrische Verbinden der Wirbelstrombremse mit mehreren Energiequellen beziehungsweise das Beaufschlagen der Wirbelstrombremse mit den mehreren Energiequellen entnommener elektrischer Energie wird eine besonders hohe Funktionssicherheit der Wirbelstrombremse sichergestellt. So wird insbesondere ein Bremsen des Rads beziehungsweise des Kraftfahrzeugs auch dann ermöglicht, falls eine Fehlfunktion der elektrischen Maschine oder des Energiespeichers vorliegt.

Hierzu sind besonders bevorzugt die elektrische Maschine und der Energiespeicher derart ausgebildet, dass sie die zum Bewirken der auf das Rad wirkenden Bremskraft mittels der Wirbelstrombremse in der Notbremsbetriebsart notwendige elektrische Energie jeweils auch alleine bereitstellen können. Bei einer derartigen Ausgestaltung der Bremsanlage kann auch bei einem vollständigen Ausfall der elektrischen Maschine oder des Energiespeichers das Rad beziehungsweise das Kraftfahrzeug zuverlässig gebremst werden.

Eine weitere Ausgestaltung der Erfindung sieht vor, dass die elektrische Maschine in einer Antriebsbetriebsart zum Antreiben des Rads als Motor betrieben wird. Hierauf wurde vorstehend bereits in Kürze hingewiesen. Die elektrische Maschine kann insoweit nicht nur generatorisch zum Umwandeln von mechanischer Bewegungsenergie des Rads in elektrischer Energie betrieben werden, sondern vielmehr auch umgekehrt motorisch, sodass elektrische Energie in mechanische Bewegungsenergie des Rads umgewandelt wird. Die elektrische Maschine ist hierbei beispielsweise nicht nur Bestandteil der Bremsanlage, sondern zusätzlich auch Bestandteil der Antriebseinrichtung für das Kraftfahrzeug.

Es kann vorgesehen sein, dass in der Antriebsbetriebsart die elektrische Maschine zum Antreiben des Rads als Motor betrieben wird und gleichzeitig das Rad mithilfe der Wirbelstrombremse gebremst wird, sodass also die Wirbelstrombremse der elektrischen Maschine entgegenwirkt. Sowohl die elektrische Maschine als auch die Wirbelstrombremse werden hierbei mit elektrischer Energie beaufschlagt, welche beispielsweise dem Energiespeicher entnommen wird. Eine derartige Vorgehensweise kann beispielsweise zur Stabilisierung des Kraftfahrzeugs durchgeführt werden. Insbesondere wird auf diese Art und Weise eine Antriebsschlupfregelung realisiert. Insgesamt ergibt sich somit eine äußerst flexible Betriebsweise der elektrischen Maschine.

Eine weitere bevorzugte Ausgestaltung der Erfindung sieht vor, dass die elektrische Maschine in einer Rekuperationsbetriebsart zum Bremsen des Rads als Generator betrieben wird, wobei die hierbei anfallende elektrische Energie zumindest teilweise in dem Energiespeicher zwischengespeichert wird. In der Rekuperationsbetriebsart soll das Rad beziehungsweise das Kraftfahrzeug derart gebremst werden, dass ein möglichst großer Anteil der mechanischen Bewegungsenergie des Rads nicht verloren geht, sondern vielmehr in elektrische Energie umgewandelt wird. Die in der Rekuperationsbetriebsart anfallende elektrische Energie wird zumindest teilweise oder sogar vollständig in dem Energiespeicher zwischengespeichert. Sie kann teilweise jedoch auch zum Betreiben eines Bordnetzes des Kraftfahrzeugs herangezogen werden. Die Rekuperationsbetriebsart ermöglicht ein energieeffizientes Betreiben der Bremsanlage.

Eine weitere Ausgestaltung der Erfindung sieht vor, dass in der Rekuperationsbetriebsart die Wirbelstrombremse zum Freigeben des Rads betrieben wird. In anderen Worten soll die Wirbelstrombremse derart angesteuert werden, dass sie eine Drehbewegung des Rads freigibt und mithin keine Bremskraft auf dieses bewirkt. Somit wird in der Rekuperationsbetriebsart die auf das Rad wirkende Bremskraft allein mittels der elektrischen Maschine erzeugt, wodurch die Effizienz der Bremsanlage deutlich verbessert wird.

Im Rahmen einer weiteren bevorzugten Ausgestaltung der Erfindung kann vorgesehen sein, dass in einer Bremsbetriebsart die elektrische Maschine und die Wirbelstrombremse zum Bremsen des Rads angesteuert werden, wobei die Wirbelstrombremse von dem Energiespeicher elektrisch entkoppelt ist und mit von der elektrischen Maschine bereitgestellter elektrischer Energie beaufschlagt wird. Die Bremsbetriebsart unterscheidet sich insoweit von der Rekuperationsbetriebsart durch die zusätzliche Verwendung der Wirbelstrombremse zum Bremsen des Rads. Die auf das Rad wirkende Bremskraft wird insoweit teilweise von der elektrischen Maschine und teilweise von der Wirbelstrombremse erzeugt. Die elektrische Maschine wird hierzu als Generator betrieben.

Die durch den generatorischen Betrieb der elektrischen Maschine anfallende elektrische Energie wird zumindest teilweise, vorzugsweise größtenteils oder sogar vollständig, der Wirbelstrombremse zugeführt. Gleichzeitig ist die Wirbelstrombremse von dem Energiespeicher elektrisch entkoppelt, sodass die Wirbelstrombremse ausschließlich mit mittels der elektrischen Maschine erzeugter elektrischer Energie betrieben wird. In der Bremsbetriebsart wird also keine von extern bereitgestellte elektrische Energie benötigt, insbesondere keine dem Energiespeicher entnommene elektrische Energie. Hierdurch wird eine hohe Effizienz der Bremsanlage erzielt.

Eine bevorzugte Weiterbildung der Erfindung sieht vor, dass in der Bremsbetriebsart die elektrische Maschine von dem Energiespeicher entkoppelt ist. Hierdurch wird sichergestellt, dass die Wirbelstrombremse ausschließlich mit derjenigen elektrischen Energie betrieben wird, die mittels der elektrischen Maschine erzeugt wird. Hierdurch wird die hohe Effizienz der Bremsanlage aufrechterhalten.

Eine weitere bevorzugte Ausführungsform der Erfindung sieht vor, dass in der Bremsbetriebsart bei Überschreiten einer von der elektrischen Maschine auf das Rad bewirkbaren Maximalbremskraft durch eine Sollbremskraft die elektrische Maschine zum Erzeugen der Maximalbremskraft eingestellt und ein der Wirbelstrombremse zugeführter Anteil der von der elektrischen Maschine bereitgestellten elektrischen Energie derart eingestellt wird, dass die elektrische Maschine und die Wirbelstrombremse zusammen eine der Sollbremskraft entsprechende Bremskraft auf das Rad bewirken.

Die Sollbremskraft bezeichnet die Bremskraft, welche auf das Rad wirken soll. Die Sollbremskraft wird beispielsweise von einem Fahrer des Kraftfahrzeugs und/oder einer Fahrerassistenzeinrichtung des Kraftfahrzeugs vorgegeben. Insbesondere stellt der Fahrer die Sollbremskraft über ein Bedienelement, vorzugsweise ein Bremspedal, ein. Die Maximalbremskraft der elektrischen Maschine entspricht derjenigen Bremskraft, welche allein mittels der elektrischen Maschine maximal bewirkbaren Bremskraft. Die Maximalbremskraft stellt insoweit die höchste Bremskraft dar, die unter Verwendung der elektrischen Maschine darstellbar ist.

Beispielsweise wird die Rekuperationsbetriebsart durchgeführt, solange die Sollbremskraft kleiner als die Maximalbremskraft ist, sodass die auf das Rad bewirkte Bremskraft allein mittels der elektrischen Maschine bereitgestellt wird. Überschreitet jedoch die Sollbremskraft die Maximalbremskraft, so ist es notwendig, eine zusätzliche Bremskraft auf das Rad zu bewirken. Hierzu dient die Wirbelstrombremse. Insoweit wird beispielsweise bei Überschreiten der Maximalbremskraft durch die Sollbremskraft in die Bremsbetriebsart umgeschaltet. Es kann jedoch auch vorgesehen sein, dass auch bei einem Unterschreiten der Maximalbremskraft durch die Sollbremskraft die Bremsbetriebsart vorliegt, sodass stets die auf das Rad wirkende Bremskraft mittels der elektrischen Maschine und der Wirbelstrombremse bereitgestellt wird, beispielsweise zu gleichen Teilen.

In jedem Fall soll jedoch in der Bremsbetriebsart bei Überschreiten der Maximalbremskraft durch die Sollbremskraft die elektrische Maschine eine der Maximalbremskraft entsprechende Bremskraft auf das Rad bewirken. Hierbei arbeitet sie als Generator, sodass die mechanische Bewegungsenergie des Rads in elektrische Energie umgewandelt wird. Zumindest ein Teil dieser elektrischen Energie wird nun der Wirbelstrombremse zugeführt, um die Differenz zwischen der Sollbremskraft und der Maximalbremskraft mittels der Wirbelstrombremse auf das Rad zu bewirken. In anderen Worten soll der Wirbelstrombremse so viel elektrische Energie zugeführt werden, dass die der Sollbremskraft entsprechende Bremskraft auf das Rad bewirkt.

Beispielsweise ist es nun vorgesehen, dass falls die von der elektrischen Maschine bereitgestellte und der Wirbelstrombremse zugeführte elektrische Energie nicht ausreichen sollte, um die der Sollbremskraft entsprechende Bremskraft auf das Rad zu bewirken, in die Notbremsbetriebsart umgeschaltet wird. In dieser wird gemäß den weiteren Ausführungen im Rahmen dieser Beschreibung zusätzliche elektrische Energie dem Energiespeicher entnommen und der Wirbelstrombremse zugeführt. Entsprechend wird ein äußerst zuverlässiges und rasches Bremsen des Kraftfahrzeugs realisiert.

Schließlich kann im Rahmen einer weiteren bevorzugten Ausgestaltung der Erfindung vorgesehen sein, dass in der Notbremsbetriebsart die elektrische Maschine zum Erzeugen der Maximalbremskraft eingestellt und die von der elektrischen Maschine bereitgestellte elektrische Energie vollständig der Wirbelstrombremse zugeführt wird. Hierauf wurde bereits hingewiesen. Eine solche Vorgehensweise führt zu einer besonders hohen auf das Rad wirkende Bremskraft. Zusätzlich zu der mittels der elektrischen Maschine bereitgestellten elektrischen Energie wird der Wirbelstrombremse in der Notbremsbetriebsart die dem Energiespeicher entnommene elektrische Energie zugeführt, sodass ein sehr rasches und zuverlässiges Bremsen des Rads beziehungsweise des Kraftfahrzeugs umgesetzt ist.

Die Erfindung betrifft weiterhin eine Bremsanlage für ein Kraftfahrzeug, insbesondere zur Durchführung des Verfahrens gemäß den Ausführungen im Rahmen dieser Beschreibung, wobei die Bremsanlage eine mit wenigstens einem Rad des Kraftfahrzeugs mechanisch gekoppelte Wirbelstrombremse zum Bereitstellen einer auf das Rad wirkenden Bremskraft aufweist, wobei eine elektrische Maschine mechanisch mit dem Rad gekoppelt oder koppelbar und elektrisch an die Wirbelstrombremse angeschlossen ist. Dabei ist vorgesehen, dass die Bremsanlage dazu ausgebildet ist, die Wirbelstrombremse in einer Notbremsbetriebsart zum Bremsen des Rads parallel mit mittels der als Generator betriebenen elektrischen Maschine bereitgestellter elektrischer Energie und mit einem Energiespeicher entnommener elektrischer Energie zu beaufschlagen.

Auf die Vorteile einer derartigen Ausgestaltung der Bremsanlage beziehungsweise einer derartigen Vorgehensweise wurde bereits hingewiesen. Sowohl die Bremsanlage als auch das Verfahren zu ihrem Betreiben können gemäß den Ausführungen im Rahmen dieser Beschreibung weitergebildet sein, sodass insoweit auf diese verwiesen wird.

Eine weitere bevorzugte Ausgestaltung der Erfindung sieht vor, dass die elektrische Maschine und die Wirbelstrombremse auf einer gemeinsamen Welle angeordnet sind. Dies ist beispielsweise der Fall, falls die elektrische Maschine als Bestandteil eines Einzelradantriebs für das Rad vorliegt. Besonders bevorzugt verfügt das Kraftfahrzeug über mehrere derartiger Einzelradantriebe, welche jeweils zumindest einem Rad des Kraftfahrzeugs zugeordnet sind. Besonders bevorzugt sind jedem Rad des Kraftfahrzeugs insoweit eine elektrische Maschine und eine Wirbelstrombremse zugeordnet, welche permanent mit dem Rad mechanisch gekoppelt sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Bremsanlage für ein Kraftfahrzeug in einer Rekuperationsbetriebsart,
- Figur 2: eine schematische Darstellung der Bremsanlage in einer Bremsbetriebsart, sowie
- Figur 3: eine schematische Darstellung der Bremsanlage in einer Notbremsbetriebsart.

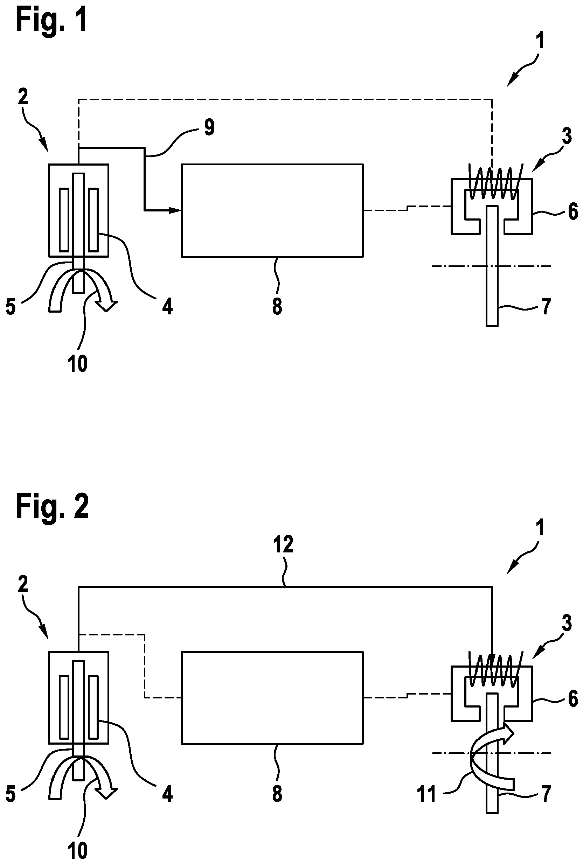

Die Figur 1 zeigt eine schematische Darstellung einer Bremsanlage 1 für ein Kraftfahrzeug. Die Bremsanlage 1 dient dem Aufbringen einer Bremskraft auf ein hier nicht dargestelltes Rad des Kraftfahrzeugs. Die Bremsanlage 1 weist eine elektrische Maschine 2 sowie eine Wirbelstrombremse 3 auf. Die elektrische Maschine 2 verfügt über einen Stator 4 sowie über einen Rotor 5, welche bezüglich des Stators 4 drehbar gelagert ist.

Die elektrische Maschine 2 beziehungsweise ihr Rotor 5 sind mit dem Rad des Kraftfahrzeugs mechanisch gekoppelt oder zumindest koppelbar. In letzterem Fall kann beispielsweise das Rad über eine Schaltkupplung an den Rotor 5 mechanisch angeschlossen sein. Die Wirbelstrombremse 3 weist ebenfalls einen Stator 6 sowie einen Rotor 7 auf. Auch hier ist der Rotor 7 bezüglich des Stators 6 drehbar gelagert. Der Rotor 7 ist mit dem Rad des Kraftfahrzeugs mechanisch gekoppelt oder zumindest koppelbar. Besonders bevorzugt ist der Rotor 7 permanent mit dem Rad wirkverbunden.

Auf das Rad des Kraftfahrzeugs kann sowohl mittels der elektrischen Maschine 2 als auch mittels der Wirbelstrombremse 3 eine Bremskraft aufgeprägt werden. Dargestellt ist die Bremsanlage 1 in einer Rekuperationsbetriebsart, in welcher die Bremskraft auf das Rad allein mittels der elektrischen Maschine 2 bewirkt wird. Die Wirbelstrombremse 3 ist hingegen zum Freigeben des Rads eingestellt beziehungsweise wird zum Freigeben des Rads betrieben.

Durch das Bewirken der Bremskraft auf das Rad wird mittels der elektrischen Maschine 2 kinetische Bewegungsenergie des Rads in elektrische Energie umgewandelt. Diese wird in einem Energiespeicher 8 zwischengespeichert. Dies ist durch den Pfeil 9 angedeutet. Ebenso angedeutet ist die von der elektrischen Maschine 2 auf das Rad ausgeübte Bremskraft, nämlich durch den Pfeil 10.

Die Figur 2 zeigt die Bremsanlage 1 in einer schematischen Darstellung, wobei die Bremsanlage 1 in einer Bremsbetriebsart vorliegt. Hierbei wird die auf das Rad wirkende Bremskraft von elektrischer Maschine 2 und Wirbelstrombremse 3 gemeinsam bewirkt. Dies ist durch die Pfeile 10 und 11 dargestellt. In der Bremsbetriebsart wird die mittels der elektrischen Maschine 2 bereitgestellte elektrische Energie der Wirbelstrombremse 3 zum Bremsen des Rads zugeführt. Dies ist durch den Pfeil 12 angedeutet.

Das bedeutet, der Energiespeicher 8 von der elektrischen Maschine 2 und der Wirbelstrombremse 3 bevorzugt entkoppelt ist, sodass die gesamte von der elektrischen Maschine 2 bereitgestellte Energie von der Wirbelstrombremse 3 zum Erzeugen der Bremskraft auf das Rad herangezogen wird. Bei einer derartigen Vorgehensweise liegen die Anteile der elektrischen Maschine 2 und der Wirbelstrombremse 3 an der Bremskraft vorzugsweise in der gleichen Größenordnung, beispielsweise sind sie identisch oder zumindest nahezu identisch.

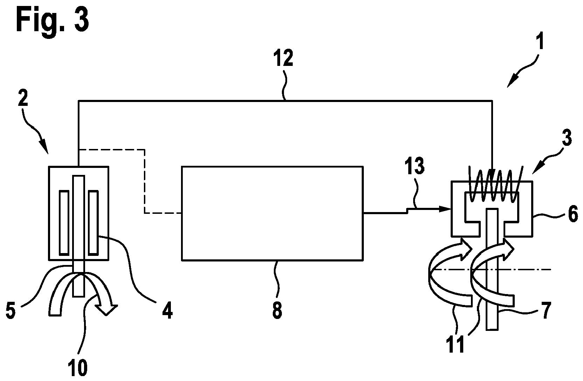

Die Figur 3 zeigt erneut eine schematische Darstellung der Bremsanlage 1, wobei diese in einer Notbremsbetriebsart betrieben wird. In dieser wird die elektrische Maschine 2 analog zu der Bremsbetriebsart zum Umwandeln von kinetischer Bewegungsenergie des Rads in elektrische Energie betrieben. Die Energie wird wiederum der Wirbelstrombremse 3 zugeführt. Sowohl die elektrische Maschine 2 als auch die Wirbelstrombremse 3 tragen insoweit zum Erzeugen der Bremskraft auf das Rad des Kraftfahrzeugs bei.

Zusätzlich ist es nun jedoch vorgesehen, der Wirbelstrombremse 3 elektrische Energie zuzuführen, die dem Energiespeicher 8 entnommen wird. Dies ist durch den Pfeil 13 angedeutet. Entsprechend kann die Wirbelstrombremse 3 einen deutlich größeren Anteil der Bremskraft auf das Rad bereitstellen, als dies im Rahmen der Bremsbetriebsart möglich ist. Dies ist durch den Doppelpfeil 11 angedeutet.

Beispielsweise beträgt der Anteil der Wirbelstrombremse 3 an der von der elektrischen Maschine 2 und der Wirbelstrombremse 3 bewirkten Bremskraft auf das Rad mindestens 60 %, mindestens 70 %, mindestens 75 % oder mindestens 80 %. Entsprechend wird eine sehr große Bremskraft auf das Rad realisiert, sodass sich eine rasche Geschwindigkeitsverringerung des Kraftfahrzeugs ergibt.

Insgesamt wird mit der Bremsanlage 1 gemäß den Ausführungen im Rahmen dieser Beschreibung ein äußerst energieeffizienter Betrieb realisiert und gleichzeitig eine hohe Sicherheit bewirkt. So kann in der Notbremsbetriebsart zum einen eine sehr hohe Bremskraft auf das Rad bewirkt werden. Zum anderen wird sichergestellt, dass auch bei einem Defekt einer Energiequelle, beispielsweise der elektrischen Maschine 2 oder des Energiespeichers 8, weiterhin eine hinreichend hohe Bremskraft mittels der Wirbelstrombremse 3 auf das Rad bewirkt wird. Entsprechend ist auch in diesem Fall eine hinreichende Verzögerung des Kraftfahrzeugs umgesetzt.

## Patentansprüche

1. Verfahren zum Betreiben einer Bremsanlage (1) für ein Kraftfahrzeug, wobei die Bremsanlage (1) eine mit wenigstens einem Rad des Kraftfahrzeugs mechanisch gekoppelte Wirbelstrombremse (3) zum Bereitstellen einer auf das Rad wirkenden Bremskraft aufweist, wobei eine elektrische Maschine (2) mechanisch mit dem Rad gekoppelt oder koppelbar und elektrisch an die Wirbelstrombremse (3) angeschlossen ist, **dadurch gekennzeichnet, dass** die Wirbelstrombremse (3) in einer Notbremsbetriebsart zum Bremsen des Rads parallel mit mittels der als Generator betriebenen elektrischen Maschine (2) bereitgestellter Energie und mit einem Energiespeicher (8) entnommener elektrischer Energie beaufschlagt wird.

2. Verfahren nach Anspruch 1, **dadurch gekennzeichnet, dass** die elektrische Maschine (2) in einer Antriebsbetriebsart zum Antreiben des Rads als Motor betrieben wird.

3. Verfahren nach einem der vorhergehenden Ansprüche, **dadurch gekennzeichnet, dass** die elektrische Maschine (2) in einer Rekuperationsbetriebsart zum Bremsen des Rads als Generator betrieben wird, wobei die hierbei anfallende elektrische Energie zumindest teilweise in dem Energiespeicher (8) zwischengespeichert wird.

4. Verfahren nach einem der vorhergehenden Ansprüche, **dadurch gekennzeichnet, dass** in der Rekuperationsbetriebsart die Wirbelstrombremse (3) zum Freigeben des Rads betrieben wird.

5. Verfahren nach einem der vorhergehenden Ansprüche, **dadurch gekennzeichnet, dass** in einer Bremsbetriebsart die elektrische Maschine (2) und die Wirbelstrombremse (3) zum Bremsen des Rads angesteuert werden, wobei die Wirbelstrombremse (3) von dem Energiespeicher (8) elektrisch entkoppelt ist und mit von der elektrischen Maschine (2) bereitgestellter elektrischer Energie beaufschlagt wird.

6. Verfahren nach einem der vorhergehenden Ansprüche, **dadurch gekennzeichnet, dass** in der Bremsbetriebsart die elektrische Maschine (2) von dem Energiespeicher (8) entkoppelt ist.

7. Verfahren nach einem der vorhergehenden Ansprüche, **dadurch gekennzeichnet, dass** in der Bremsbetriebsart bei Überschreiten einer von der elektrischen Maschine (2) auf das Rad bewirkten Maximalbremskraft durch eine Sollbremskraft die elektrische Maschine (2) zum Erzeugen der Maximalbremskraft eingestellt und ein der Wirbelstrombremse (3) zugeführter Anteil der von der elektrischen Maschine (2) bereitgestellten elektrischen Energie derart eingestellt wird, dass die elektrische Maschine (2) und die Wirbelstrombremse (3) zusammen eine der Sollbremskraft entsprechende Bremskraft auf das Rad bewirken.

8. Verfahren nach einem der vorhergehenden Ansprüche, **dadurch gekennzeichnet, dass** in der Notbremsbetriebsart der elektrischen Maschine (2) zum Erzeugen der Maximalbremskraft eingestellt und die von der elektrischen Maschine (2) bereitgestellte elektrische Energie vollständig der Wirbelstrombrems (3) zugeführt wird.

9. Bremsanlage (1) für ein Kraftfahrzeug, insbesondere zur Durchführung des Verfahrens nach einem oder mehreren der vorhergehenden Ansprüche, wobei die Bremsanlage (1) eine mit wenigstens einem Rad des Kraftfahrzeugs mechanisch gekoppelte Wirbelstrombremse (3) zum Bereitstellen einer auf das Rad wirkenden Bremskraft aufweist, wobei eine elektrische Maschine (2) mechanisch mit dem Rad gekoppelt oder koppelbar und elektrisch an die Wirbelstrombremse (3) angeschlossen ist, **dadurch gekennzeichnet, dass** die Bremsanlage (1) dazu ausgebildet ist, die Wirbelstrombremse (3) in einer Notbremsbetriebsart zum Bremsen des Rads parallel mit mittels der als Generator betriebenen elektrischen Maschine (2) bereitgestellter elektrischer Energie und mit einem Energiespeicher (8) entnommener elektrischer Energie zu beaufschlagen.

10. Bremsanlage nach Anspruch 9, **dadurch gekennzeichnet, dass** die elektrische Maschine (2) und die Wirbelstrombremse (3) auf einer gemeinsamen Welle angeordnet sind.
